# EUROPÄISCHE PATENTANMELDUNG

(11) **EP 4 810 845 A1**
(43) Veröffentlichungstag der Anmeldung: **23.09.2026**
(21) Anmeldenummer: 26159269.5
(22) Anmeldetag: 18.02.2026
(51) Int. Cl.: F16L 37/088, F16L 37/14

(54) **STECKVERBINDER FÜR SCHLAUCH- UND/ODER ROHRVERBINDUNGEN MIT MONTAGESICHERUNG**

(30) Priorität: 18.03.2025 DE 102025110430
(71) Anmelder: Voss Automotive GmbH, 51688 Wipperfürth (DE)
(72) Erfinder: HEINRICHS, Eugen, 51702 Bergneustadt (DE); OBERDÖRFER, Alexander, 42499 Hückeswagen (DE); WASCHKEWITZ, Markus, 51702 Bergneustadt (DE); CANPOLAT, Kazim, 41540 Dormagen (DE); KLEHR, Adrian, 59494 Soest (DE)
(74) Vertreter: Dr. Solf & Zapf Patent- und Rechtsanwalts PartG mbB

(57) **Zusammenfassung**

Die Erfindung betrifft einen Steckverbinder (1) für Schlauch- und/oder Rohrverbindungen, umfassend ein Kupplungsteil (4) mit einer Aufnahmeöffnung (10), in die ein Steckerteil (S) mit einem Steckerschaft (S1) in einer Einsteckrichtung (SR) entlang einer Steckachse (X-X) einsteckbar ist, und eine von der Grundgestalt her U-förmige, vier Klammerarme (51, 52, 53, 54) aufweisende Halteklammer (5), die am Kupplungsteil (4) durch ein radiales Einschieben in einer Montagerichtung (MR) vormontierbar ist. Es wird vorgeschlagen, dass die Halteklammer (5) ein metallisches Biege-Stanzteil oder ein Spritzgussteil oder Formteil aus einem Hochleistungskunststoff oder aus einem Organoblech ist.

## Beschreibung

Die Erfindung betrifft einen Steckverbinder für Schlauch- und/oder Rohrverbindungen, umfassend ein Kupplungsteil mit einer Aufnahmeöffnung, in die ein Steckerteil mit einem Steckerschaft in einer Einsteckrichtung entlang einer Steckachse einsteckbar ist, und eine radial geschlitzte, zumindest bereichsweise federelastische, vier Klammerarme aufweisende Halteklammer, die am Kupplungsteil durch ein radiales Einschieben in einer Montagerichtung vormontierbar ist, wobei die Halteklammer in einer Vormontage-Stellung eine Einführposition für das Steckerteil einnimmt, in der das Steckerteil in die Aufnahmeöffnung einführbar ist, und wobei die Halteklammer in einer Montage-Stellung nach dem Einführen des Steckerteils eine Halteposition für das eingesteckte Steckerteil einnimmt, in der das Steckerteil in der Aufnahmeöffnung mittels der Halteklammer formschlüssig gegen ein Herausziehen blockiert ist, und wobei die Halteklammer von der Grundgestalt her U-förmig ausgebildet ist, und die Schenkel des U zwei Paare von jeweils einander diametral gegenüberliegenden Klammerarmen ausbilden, die in axialer Richtung hintereinander angeordnet, jeweils durch einen Schlitz voneinander getrennt und in radialer Richtung federelastisch sind.

Ein derartiger Steckverbinder ist aus der DE 10 2019 111 199 A1 bekannt. Bei diesem bekannten Steckverbinder ist zusätzlich vorgesehen, dass auf einer der Einsteckrichtung des Steckerteils zugewandten Seite des ersten Paares von Rastarmen, das auf einer der Einsteckrichtung des Steckerteils zugewandten Seite der Halteklammer liegt, sich jeweils vordere Schrägflächen befinden, die zum Zusammenwirken mit dem Steckerteil entgegen der Einführrichtung des Steckerteils divergieren. Im Sinne einer Flexibilisierung des Stecksystems und um einen Steckverbinder zur Verfügung zu stellen, der bei hoher Funktionalität und einfacher Montage sowie Demontage mit geringem Aufwand herstellbar ist, ist dabei vorgesehen, dass die vorderen Schrägflächen jeweils auf radial nach innen - in Richtung auf die Steckachse hin - gerichteten Zacken des ersten Paares von Rastarmen - in Einschubrichtung der Halteklammer gesehen - unterhalb der Steckachse angeordnet sind, wobei die Zacken derart voneinander beabstandet sind, dass die vorderen Schrägflächen beim Einführen des Steckerteils von einem Dichtungsabschnitt des Steckerteils, der in Einsteckrichtung vor einem Bund des Steckerteils liegt, gespreizt werden. Die Halteklammer kann wie das Kupplungsteil bevorzugt aus einem, insbesondere faserverstärkten, technischen Kunststoff gefertigt sein. Sowohl in der Vormontage-Stellung als auch in der Montage-Stellung tauchen alle Schenkel der Halteklammer in das Kupplungsteil ein.

Ein Steckverbinder der eingangs genannten Art ist auch aus der DE 10 2022 104 970 A1 bekannt. Die darin beschriebene technische Lösung betrifft einen Steckverbinder zum Verbinden von einer ersten Fluidleitung mit einem Gegensteckverbinder, aufweisend einen Grundkörper mit einem Durchgangskanal, der fluidisch mit einem als Muffenabschnitt ausgebildeten Ende des Grundkörpers verbunden ist. In einem Aufnahmekanal des Muffenabschnitts ist - im Gegensatz zur vorstehend genannten DE 10 2019 111 199 A1 - ein Klammerkäfig angeordnet, der in eine Montagerichtung in den Aufnahmekanal des Muffenabschnitts einsteckbar und formschlüssig axial zur Montagerichtung gehalten ist. Zwei parallel zueinander verlaufende Haltearme einer Halteklammer ragen in einem Ruhezustand der Haltearme in eine Durchgangsöffnung des Klammerkäfigs hinein und sind radial zur Durchgangsöffnung elastisch in einen Spannungszustand aufweitbar ausgebildet. Die Halteklammer ist zwischen einer Einführstellung und einer Blockierstellung verschiebbar ausgebildet, wobei die Haltearme in der Einführstellung der Halteklammer in ihren Spannungszustand aufweitbar und in der Blockierstellung der Halteklammer gegen eine Aufweitung in den Spannungszustand blockiert sind. Die Halteklammer weist zwei radial zur Durchgangsöffnung elastische Lagerarme auf, welche den Klammerkäfig in dem Aufnahmekanal formschlüssig fixieren und in einem Ruhezustand in die Durchgangsöffnung hineinragen und radial elastisch in einen Spannungszustand aufweitbar ausgebildet sind. Die Implementierung eines Klammerkäfigs stellt - im Vergleich mit der DE 10 2019 111 199 A1 - die Verwendung eines zusätzlichen Bauteils und einen zusätzlichen Montageschritt dar.

Ein Steckverbinder der eingangs genannten Art (ohne einen zusätzlichen Klammerkäfig) ist des Weiteren auch aus der WO 2017/067950 A1 bekannt, wobei die dort beschriebene technische Lösung einen Steckverbinder zur Verfügung stellt, bei dem sowohl der Vormontage-Vorgang der Halteklammer als auch der Montage- und Demontage-Vorgang des Steckerteils gegenüber dem vorbekannten Stand der Technik verbessert wird. Dabei kann insbesondere auch die Halteklammer gegen ein Verlieren gesichert werden. Die axial hintereinanderliegenden Paare von Klammerarmen erfüllen dabei unterschiedliche Funktionen. Das erste Paar von Rastarmen erfüllt eine Hauptfunktion, indem es das Steckerteil in der Halteposition formschlüssig gegen ein Herausziehen blockiert, und das zweite Paar von Rastarmen erfüllt eine Nebenfunktion, indem es die Halteklammer sowohl in der Vormontage-Stellung als auch in der Montage-Stellung verliersicher im Kupplungsteil hält. In diesem bekannten Steckverbinder koinzidieren insbesondere die Vormontage-Stellung und die Montage-Stellung der Halteklammer, d. h. die Halteklammer ist in beiden Stellungen - Vormontage-Stellung und Montage-Stellung - koaxial zur Achse des Kupplungsteiles ausgerichtet.

Steckerteile, wie sie eingangs genannt sind, können beispielsweise nach der Norm SAE J 2044 ausgebildete Male-Stecker Stecker sein, die in der WO 2017/067950 A1 ebenfalls detailliert beschrieben sind. Ein solches Steckerteil ist hohlzylinderförmig ausgebildet. Es weist einen Einsteckabschnitt auf, an dessen Außenumfang ein umlaufender Bund angeordnet ist. Der Bund teilt den Einsteckabschnitt in einen Dichtungsabschnitt und in einen Verriegelungsabschnitt auf, wobei der Dichtungsabschnitt axial, also auf der Längsachse des Steckerteils, in Einsteckrichtung vor dem Verriegelungsabschnitt angeordnet ist. Im Montagezustand greift die Halteklammer hinter den in der SAE-Steckerkontur ausgebildeten Bund. Auf dem Dichtungsabschnitt sitzt nach dem Stecken des Steckers üblicherweise ein Dichtungspaket.

Wenngleich das Design der Halteklammern gemäß den vorstehend genannten Dokumenten aufgrund der verschiedenen daran präzise auszuführenden Einzelheiten zum Teil aufwändig gestaltet ist, findet das genannte Stecksystem doch erfolgreich Anwendung im Automobilbau, und zwar insbesondere in Kraftstoffsystemen sowie in beheizten und unbeheizten SCR-Systemen. SCR steht dabei für "Selective catalytic reduction" und bezeichnet eine Technik zur Reduktion von Stickoxiden in Abgasen.

In der DE 20 2019 002 026 U1 ist eine aufnehmende Düse einer Verbindung, die ein Einführen einer Steckdüse mit einer reduzierten Kraft ermöglicht, offenbart. Diese Düse weist - wie die DE 10 2019 111 199 A1 - ebenfalls keinen Klammerkäfig auf, jedoch ist ein Haltering vorhanden, der auf der Seite eines Verbindungsendes der Düse in deren Hauptkörper eingeführt wird und u. a. dazu dient, einen O-Ring in dem Hauptkörper zu halten. Durch einen U-förmig ausgebildeten Überbrückungsclip mit abgewinkelten Enden, der metallisch und insbesondere aus einem Draht gebildet sein kann und in Aussparungen des Ringes und des Hauptkörpers eingeführt wird, wird der Ring im Hauptkörper gehalten. Ein solcher, auch in anderen Anwendungen einsetzbarer Clip - öfter auch als Standard-Clip bezeichnet - weist im Gegensatz zu den erwähnten Halteklammern nur ein Paar von einander gegenüberliegenden U-Schenkeln auf. Eine Halteklammer wie bei dem Steckverbinder gemäß der DE 10 2019 111 199 A1 ist nicht vorhanden.

Diese und ähnliche weitere fluidische Steckverbinder, wie z. B. gemäß der EP 3 736 481 A1, werden, einschließlich des erwähnten Standardclips, insofern sie bevorzugt nach geometrischen Vorgaben und maßlichen Normen des Verbands der Automobilindustrie (VDA) ausgeführt sein können bzw. üblicherweise auch ausgeführt sind, als Kupplungssysteme nach VDA-Standard bezeichnet. Ihre Bestandteile können aufgrund der verbindlichen Standardvorgaben vorteilhafterweise universell kombiniert werden.

Die EP 3 904 746 A1 beschreibt einen Schnellverbinder, der dadurch gekennzeichnet ist, dass er ein Hülsenbauteil und eine als Klammer ausgebildete Gleitverriegelung umfasst, wobei das Hülsenbauteil einen Hauptkörper aufweist, der ein Aufnahmeloch zum Aufnehmen einer Fluidleitung definiert, die darin in axialer Richtung einsetzbar bzw. eingesetzt ist und eine ringförmige Nut aufweist. Die Gleitverriegelung erstreckt sich in einer Querrichtung zur axialen Richtung in einer inneren Aussparung im Hauptkörper des Hülsenbauteils und ist so konfiguriert, dass sie sich während des Einführens der Fluidleitung durch mechanische Interaktion mit einem Ende der Fluidleitung in die Hülsenkomponente radial elastisch in Richtung der Außenseite des Hülsenbauteils verformt, wobei sie dazu neigt, sich als Reaktion auf die radiale elastische Verformung selbsttätig in der Querrichtung in Richtung der Innenseite der Hülsenkomponente zu bewegen. Das Hülsenbauteil weist ferner eine Anschlagkomponente auf, die dazu ausgebildet ist, diese automatisch ablaufende Bewegung der Gleitverriegelung während des Einführens der Fluidleitung zu stoppen und eine Anschlagfunktion der Gleitverriegelung freizugeben, wenn die Fluidleitung vollständig in den Hauptkörper des Hülsenbauteils eingeschoben ist. Die Gleitverriegelung umfasst ferner mindestens einen Verriegelungshaken, welcher mit einer Verriegelungsnase zusammenpasst, die im Hauptkörper des Hülsenbauteils vorgesehen ist, wobei sich der Verriegelungshaken über die Verriegelungsnase bewegt und diese schließlich umfasst, wenn die Fluidleitung vollständig in den Hauptkörper des Hülsenbauteils eingeschoben ist.

Die US 2017/0146173 A1 beschreibt ebenfalls einen bekannten Steckverbinder, ähnlich der eingangs genannten Art, mit einem Klammerkäfig, der jedoch mit dem Kupplungsteil mit der Aufnahmeöffnung auch einstückig ausgeführt werden kann. Der Steckverbinder ist - wie derjenige gemäß der EP 3 904 746 A1 und der gemäß der nachfolgend gewürdigten US 2021/301961 A1 - vorteilhafterweise durch einen - auch als "AutoLatch" benennbaren - selbsttätigen Verbindungsaufbau gekennzeichnet, wobei u. a. auch ein wichtiges Merkmal angesprochen wird, dem bei derartigen Steckverbindungen eine hohe Relevanz zuzumessen ist.

Es handelt sich dabei um eine Anzeige des Steckzustandes. So kann dazu z. B. ein zusätzlich zu einer Halteklammer vorhandener U-förmiger Clip vorgesehen sein, der als Indikator für den Zustand des Zusammenbaus dient. Wenn der Stecker ordnungsgemäß in die Buchse eingesteckt ist, ragt der Clip zunächst aus der Steckverbindung heraus, d. h. er befindet sich in einer erhabenen, hohen Position, so dass ein Bediener eine erste visuelle und/oder taktile Überprüfung vornehmen kann, um festzustellen, ob die Steckverbindung ordnungsgemäß zusammengebaut ist. Danach erfolgt eine zweite Überprüfung durch einen zweiten Bediener, der seinerseits feststellt, dass sich der Clip in einer vorstehenden Position befindet, und der ihn dann manuell in die Steckverbindung hineinschiebt, so dass er sich nicht mehr in der vorstehenden Position befindet, sondern in einer niedrigen Position. Diese zweistufige Prüfung ermöglicht es, die ordnungsgemäße Montage der Kupplung zu überwachen und dadurch Montagefehler an einer Montagelinie zu begrenzen, allerdings erfordert sie auch zwei Bedienpersonen.

In der US 2021/301961 A1 wird eine Rohrverbindungsvorrichtung beschrieben, welche ein Buchsenteil umfasst, in das ein Steckerteil eingesteckt werden kann, welches mit einer ringförmigen Nut versehen ist. Das Buchsenteil verfügt über zwei seitliche Schlitze. Die Vorrichtung umfasst außerdem einen U-förmigen, vorzugsweise metallischen, Clip, der aus einem Kopf und zwei Schenkeln besteht, welche das Buchsenteil überspannen. Jeder Schenkel ragt in einen seitlichen Schlitz des Buchsenteils und endet mit einem abgewinkelten Fuß. Ähnlich wie bei der US 2017/146173 A1 dient er dabei auch hier als Steckindikator. So kann der Clip insbesondere bei nicht vorhandener Verbindung eine hochgezogene Stellung einnehmen und bei Vorliegen einer Verriegelung eine eingedrückte Stellung. Auch die Einnahme einer Zwischenstellung, in der sich der Clip in einer Höhe zwischen den beiden vorgenannten Positionen befindet, ist möglich. Die Vorrichtung umfasst des Weiteren einen Ring mit zwei seitlichen Öffnungen, die den seitlichen Schlitzen des Buchsenteils zugewandt sind, sowie zwei seitliche Führungssysteme, die mit den Füßen des Clips zusammenwirken, um den Clip in der angehobenen oder in der eingedrückten Position zu halten. Jedes Führungssystem umfasst eine Kerbe, eine Platte, die eine Unterkante der Kerbe begrenzt, und eine Nase, die an einer flexiblen Lasche angeordnet ist, die vom Ring getragen wird. Die ringförmige Nut ist den seitlichen Schlitzen zugewandt, um den Wechsel des Clips zwischen der eingedrückten Position und der angehobenen Position zu ermöglichen. Das Führungssystem stellt einen zusätzlichen Mechanismus dar, der den Aufbau der Rohrverbindungsvorrichtung vergleichsweise aufwändiger macht.

Der Erfindung liegt die Aufgabe zugrunde, einen Steckverbinder der eingangs genannten Art zur Verfügung zu stellen, der bei hoher Funktionalität und einfacher Montage, insbesondere selbsttätiger Verriegelung nach dem Einschieben eines Steckerteils, mit geringem Aufwand herstellbar ist. Des Weiteren soll der Steckverbinder auch eine einfache, eindeutige und zuverlässige Indikation des Steckzustands ermöglichen und kompatibel mit den geometrischen Vorgaben und maßlichen Normen des Verbands der Automobilindustrie (VDA), bevorzugt auch unter Verwendung von nach VDA-genormten Teilen ausführbar sein.

Die Aufgabe wird erfindungsgemäß durch die Merkmale des kennzeichnenden Teils des Anspruchs 1 gelöst.

Demnach ist vorgesehen, dass die Halteklammer ein metallisches Biege-Stanzteil oder ein Spritzgussteil oder Formteil aus einem Hochleistungskunststoff oder aus einem Organoblech ist. Hierbei verbinden sich erfindungsgemäß Verschleißarmut sowie hohe Festigkeit und Zähigkeit mit den für die erforderliche Aufweitbarkeit der Klammerarme, Haltekraft und Federwirkung der Halteklammer optimalen Elastizitätsmodul-Bereichen. Außer einem stabilen und sicheren Betrieb mit dem erfindungsgemäßen Steckverbinder ist dabei auch eine bruchfreie Montage, Demontage und langzeitliche Wiedermontagemöglichkeit gewährleistet. Die Halteklammer kann - verglichen mit der Halteklammer gemäß dem eingangs genannten Stand der Technik, da keine ausgeprägten Schrägflächen, Zacken und/oder Führungszapfen, wie dort beschrieben, erforderlich sind - eine optimal kompakte, wenig raumgreifende Form aufweisen.

Wenn dabei anmeldungsgemäß die Ausdrücke "technischer Kunststoff" und "Hochleistungskunststoff" verwendet werden, so beziehen sich diese zunächst auf eine in der Fachwelt übliche Einteilung der Kunststoffe hinsichtlich ihrer Dauergebrauchstemperatur. Danach wird zwischen Massen- oder Standardkunststoffen mit einer Dauergebrauchstemperatur bis zu 90 °C, technischen Kunststoffen mit einer Dauergebrauchstemperatur bis zu 140 °C und Hochleistungskunststoffen mit einer Dauergebrauchstemperatur über 140 °C unterschieden. Hochleistungskunststoffe weisen in der Regel auch hohe mechanische Festigkeiten auf.

Die Dauergebrauchstemperatur kann auf verschiedene Weise ermittelt werden. In der Methode nach UL 746 B wird ein sogenannter Temperatur-Index angeführt, d. h., es wird diejenige Temperatur bestimmt, bei der der Polymerwerkstoff nach 60 000 bzw. 100 000 Stunden noch die Hälfte seiner Zugfestigkeit, seiner Schlagzugfestigkeit oder seiner elektrischen Durchschlagfestigkeit aufweist. Eine analoge Methode ist die IEC 216 (International Electrical Committee), die der DIN VDE 0304 entspricht. Nach dieser Methode wird diejenige Temperatur bestimmt, bei der nach 20 000 Stunden die Werte der mechanischen und elektrischen Eigenschaften nur noch die Hälfte betragen.

Als Massenkunststoffe werden aufgrund dieser Kriterien insbesondere Polyethylen (PE), Polypropylen (PP), Polyvinylchlorid (PVC), Polymethacrylsäuremethylester (PMMA), Acrylnitril-Butadien-Styrol (ABS) und Polystyrol (PS) klassifiziert.

Zu den technischen Kunststoffen zählen Polyamid (PA), Polyethylenterephthalat (PET), Polybutylenterephthalat (PBT), Polycarbonat (PC) und Polyoxymethylen (POM).

Zu den Hochleistungskunststoffen zählen Polytetrafluorethylen (PTFE), Polyvinylidenfluorid (PVDF), Polysulfone (PSU), Polyaryletherketone (PAEK), Polyphenylensulfide (PPS), Polyimide (PI) und Polyphthalamide (PPA) sowie verschiedene Copolymere, die die kleinsten repetierenden Ketten-Struktureinheiten der vorgenannten Verbindungen gemeinsam enthalten. Da diese hochwertigen Polymere sehr aufwändig herzustellen und folglich teuer sind, beschränkt sich ihr Einsatz im Allgemeinen bekanntermaßen auf bestimmte Spezialfälle.

Gegebenenfalls sind aber auch Polyamid-Verbundwerkstoffe, insbesondere glasfasergefüllte Polyamide (PA) mit im Vergleich zu anderen, die Eigenschaften von technischen Kunststoffen aufweisenden Polyamiden höherer Festigkeit und thermischer Beständigkeit, als Werkstoffe für die Halteklammer geeignet. Insofern werden derartige Werkstoffe ebenfalls anmeldungsgemäß unter dem Begriff "Hochleistungskunststoff" subsumiert.

Organobleche sind spezielle Faserverbundwerkstoffe, insbesondere Faser-Matrix-Halbzeuge. Sie bestehen aus einem Fasergewebe oder einem Fasergelege, die in eine thermoplastische Kunststoffmatrix eingebettet sind. Die Vorteile der thermoplastischen Matrix liegen in der Warmumformfähigkeit der Halbzeuge und den daraus resultierenden kürzeren Prozesszeiten im Vergleich mit konventionellen duroplastischen Faserverbundwerkstoffen. Häufig verwendete Faserwerkstoffe sind dabei Glas, Aramid und Kohlenstoff (Carbon). Bei Geweben und Gelegen können die Fasern auch rechtwinklig zueinander verlaufen, so dass die mechanischen Eigenschaften von Organoblech wie Steifigkeit, Festigkeit und Wärmeausdehnung sogar besser als bei ihren metallischen Vorbildern definiert werden können. Im Gegensatz zu Metallblechen sind das Zug- und Druckverhalten sowie andere mechanische und thermische Eigenschaften nicht isotrop.

In alternativer Weise wird die der Erfindung zugrundeliegende Aufgabe erfindungsgemäß durch die Merkmale des kennzeichnenden Teils des Anspruchs 7 gelöst.

Demnach ist vorgesehen, dass die Klammerarme der Halteklammer sowohl in der Vormontage-Stellung als auch in der Montage-Stellung jeweils in, zumindest bereichsweise schlitzartigen, im Kupplungsteil ausgebildeten Nuten aufgenommen sind, die sich in umfangsgemäßer Richtung außenseitig des Kupplungsteils erstrecken, wobei in der Vormontage-Stellung
- die Klammerarme eines ersten Paares von Klammerarmen, welche dem einzuführenden Steckerteil abgewandt sind, gar nicht oder nur geringfügig radial aufgeweitet sind und dementsprechend nur unter geringer oder keiner radialer Spannung stehen, wobei diese Klammerarme zusammen mit einem Steg am Kupplungsteil die Halteklammer am Kupplungsteil fixieren, und
- die Klammerarme eines zweiten Paares von Klammerarmen, welche dem einzuführenden Steckerteil zugewandt sind, gar nicht oder nur geringfügig radial aufgeweitet sind und dementsprechend nicht unter radialer mechanischer Spannung stehen, wobei die freien Enden der Klammerarme am oder im Kupplungsteil geführt sind,
   und wobei in der Montage-Stellung
- die Klammerarme des ersten Paares von Klammerarmen wie in der Vormontage-Stellung gar nicht oder nur geringfügig radial aufgeweitet sind und dementsprechend nur unter geringer oder keiner radialer Spannung stehen, wobei die freien Enden des ersten Paares der Klammerarme in einer Nut des Kupplungsteils liegen und sich auf dem Steckerteil abstützen,
- die Klammerarme des zweiten Paares von Klammerarmen formschlüssig in das Steckerteil eingreifen, wodurch das Steckerteil im Kupplungsteil fixiert ist, wobei die freien Enden des zweiten Paares der Klammerarme auf dem Außenumfang des Kupplungsteils liegen und sich dort abstützen,
wobei in der Vormontage-Stellung eine Mittenachse der Halteklammer exzentrisch zu einer Querachse, insbesondere zu einer Mittenachse des Kupplungsteils und in der Montage-Stellung die Querachse der Halteklammer konzentrisch zur Mittenachse des Kupplungsteils angeordnet ist.

Was die erfindungsgemäße Ausbildung der Halteklammer betrifft, so ist es fertigungs- und montagetechnisch äußerst vorteilhaft, wenn die Halteklammer hinsichtlich einer durch sie verlaufenden Längsachse symmetrisch ausgebildet ist. Hierbei kann insbesondere vorgesehen sein, dass die jeweiligen Schenkel des U des ersten Paares von Klammerarmen endseitig jeweils geradlinig ausgebildet sind und in der Mitte jeweils einen - von der Längsachse aus gesehen - konkav (nach außen gewölbten) kreisbogenförmig ausgebildeten Abschnitt aufweisen, während die jeweiligen Schenkel des U des zweiten Paares von Klammerarmen über ihre gesamte Länge im Wesentlichen geradlinig ausgebildet sind. Dies impliziert, dass ihre Breite veränderlich sein kann. Für die erfindungsgemäß eingesetzte Halteklammer ist es möglich, diese anstelle eines sogenannten VDA-Standardclips jeweils gemeinsam mit einem Kupplungsteil einzusetzen, das den geometrischen Vorgaben und maßlichen Normen des Verbands der Automobilindustrie entspricht. Dabei ist es von Vorteil, dass die erfindungsgemäß eingesetzte Halteklammer im Gegensatz zu einem VDA-Standardclip eine eindeutige Anzeige des Steckzustandes gewährleistet.

Wie im Stand der Technik erfüllen die axial hintereinanderliegenden Paare von Klammerarmen erfindungsgemäß unterschiedliche Funktionen, wobei sich jedoch die Art und Weise dieser Funktionserfüllung vom Stand der Technik im Detail unterscheidet. Das beim Einstecken dem Steckerteil zugewandte Paar von Klammerarmen dient zur Erfüllung der Hauptfunktion der Verbindungsherstellung und Sicherung der Steckverbindung in der Montage-Stellung, also zum radialen Verrasten des Steckerteils im Kupplungsteil mittels der Halteklammer, während das beim Einstecken dem Steckerteil abgewandte Paar von Klammerarmen zur Steuerung der Funktion des selbsttätigen Einziehens der Halteklammer dient, wenn das Steckerteil in das Kupplungsteil eingeführt wird. Ein Klammerkäfig wie im Stand der Technik ist dabei nicht notwendig.

Außerdem dient das beim Einstecken dem Steckerteil abgewandte erste Paar von Klammerarmen in der Vormontage-Stellung der Fixierung der Halteklammer am Kupplungsteil, wodurch vorteilhafterweise bereits ein stabiler Aus- bzw. Anlieferungszustand der Baueinheit repräsentiert wird. In dem Kupplungsteil, insbesondere in dessen Grundkörper, kann ein Dichtungspaket, mindestens aber eine elastomere O-Ringdichtung angeordnet sein, das bzw. die durch einen Buchsenring in der Aufnahmeöffnung gehalten wird.

Da in der Vormontage-Stellung die Mittenachse der Halteklammer exzentrisch zu einer Mittenachse des Kupplungsteils angeordnet ist, steht die Halteklammer radial gegenüber dem Kupplungsteil vor, wodurch auf einfache Weise angezeigt wird, dass die Montage-Stellung noch nicht erreicht ist.

Das beim Einstecken dem Steckerteil zugewandte Paar von Klammerarmen kann mit Vorteil außerdem in einfacher Weise ebenfalls eine Funktion zur Indikation des Steckzustandes übernehmen, insofern bevorzugt vorgesehen werden kann, dass in der Montage-Stellung, wenn die Klammerarme des zweiten Paares von Klammerarmen formschlüssig in das Steckerteil eingreifen, von mindestens einem Klammerarm des zweiten Paares eine Markierung, insbesondere ein aufgedruckter Barcode oder QR-Code/DMC, auf dem Außenumfang des Kupplungsteils freigegeben ist, wobei diese Markierung in der Vormontage-Stellung von den Klammerarmen des zweiten Paares von Klammerarmen zumindest teilweise abgedeckt ist. Zum Abdecken kann beispielsweise ein abgewinkeltes Endstück dienen, das sich an einem freien Ende mindestens eines Klammerarmes befindet.

Weitere vorteilhafte Ausgestaltungen der Erfindung ergeben sich aus der folgenden Figurenbeschreibung und den abhängigen Unteransprüchen.

Es zeigen:

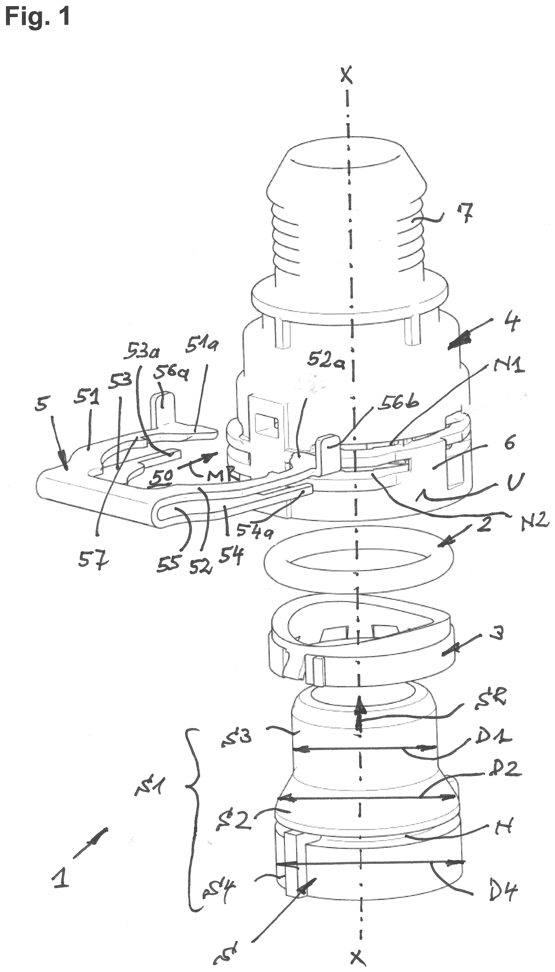

- Fig. 1: eine perspektivische dreidimensionale Einzelteildarstellung einer bevorzugten Ausführungsform eines erfindungsgemäßen Steckverbinders, einschließlich eines Steckerteils,

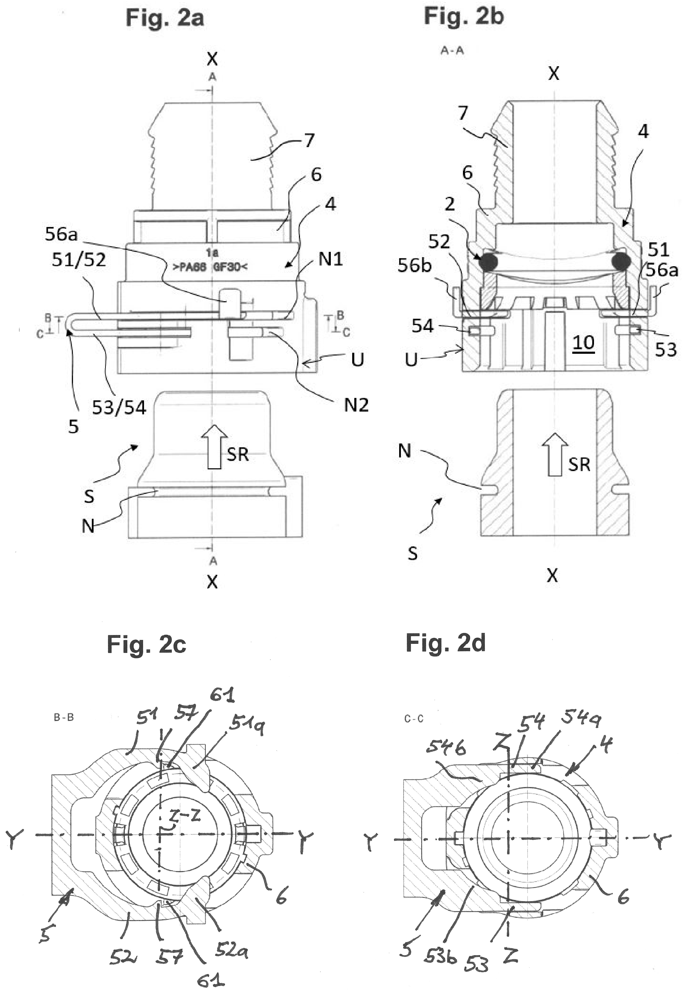

- Fig. 2a bis Fig. 2d: die in Fig. 1 dargestellte erste Ausführungsform eines erfindungsgemäßen Steckverbinders in einer Vormontage-Stellung, in der Vorderansicht (Fig. 2a), im Längsschnitt entlang der Linie A-A in Fig. 2a (Fig. 2b), im Querschnitt entlang der Linie B-B in Fig. 2a (Fig. 2c) und im Querschnitt entlang der Linie C-C in Fig. 2a (Fig. 2d),

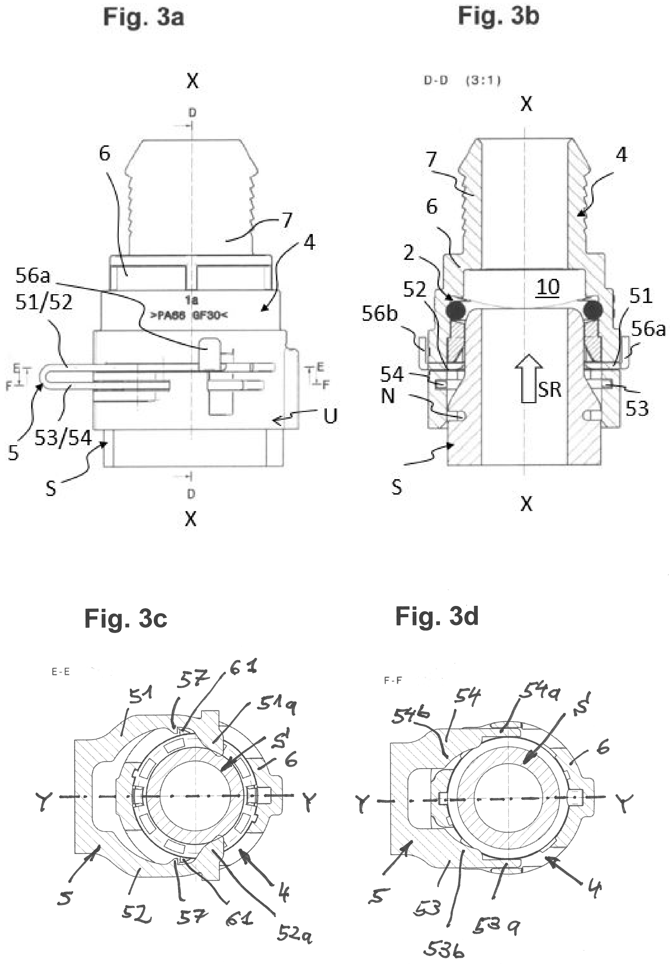

- Fig. 3a bis Fig. 3d: die in Fig. 1 dargestellte erste Ausführungsform eines erfindungsgemäßen Steckverbinders in einer ersten Zwischenstellung bei der Montage, in der Vorderansicht (Fig. 3a), im Längsschnitt entlang der Linie D-D in Fig. 3a (Fig. 3b), im Querschnitt entlang der Linie E-E in Fig. 3a (Fig. 3c) und im Querschnitt entlang der Linie F-F in Fig. 3a (Fig. 3d),

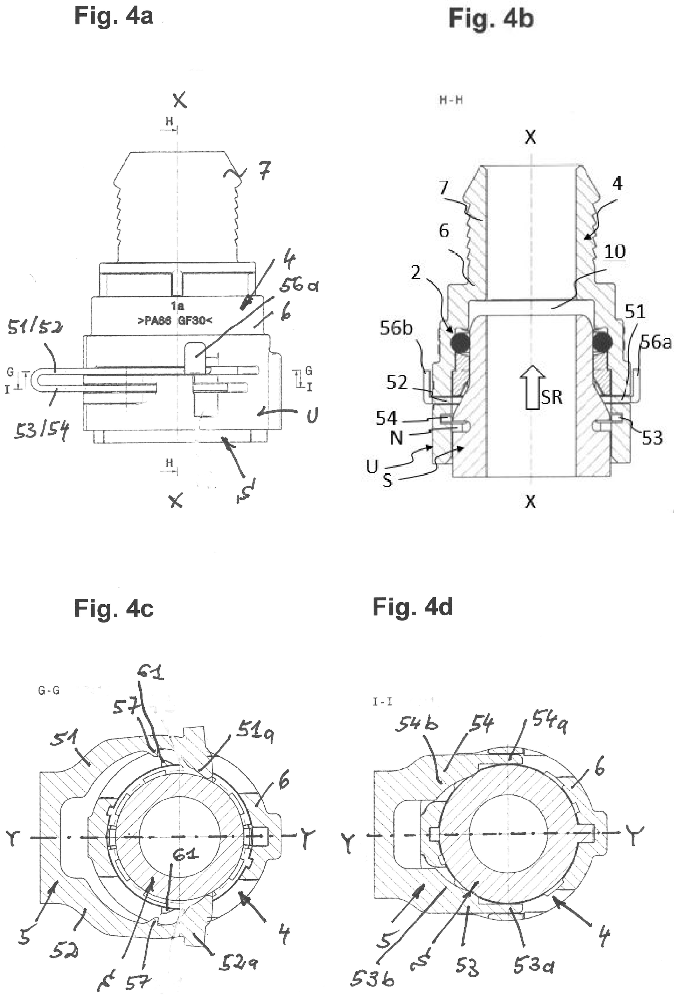

- Fig. 4a bis Fig. 4d: die in Fig. 1 dargestellte erste Ausführungsform eines erfindungsgemäßen Steckverbinders in einer zweiten Zwischenstellung bei der Montage, in der Vorderansicht (Fig. 4a), im Längsschnitt entlang der Linie H-H in Fig. 4a (Fig. 4b), im Querschnitt entlang der Linie G-G in Fig. 4a (Fig. 4c) und im Querschnitt entlang der Linie I-I in Fig. 4a (Fig. 4d),

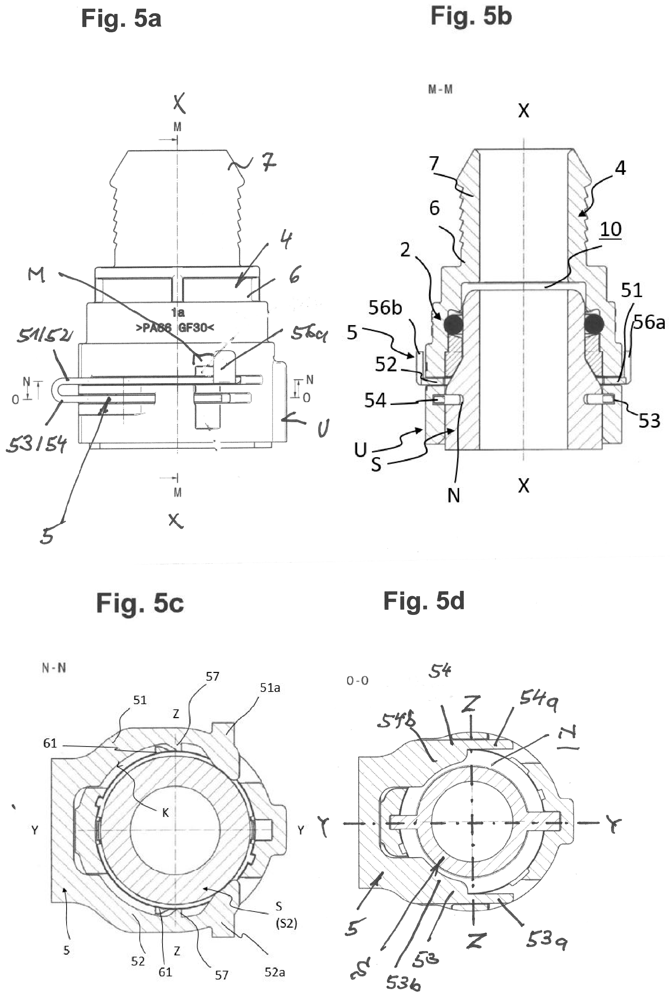

- Fig. 5a bis Fig. 5d: die in Fig. 1 dargestellte erste Ausführungsform eines erfindungsgemäßen Steckverbinders in der Montage-Stellung, in der Vorderansicht (Fig. 5a), im Längsschnitt entlang der Linie MM in Fig. 5a (Fig. 5b), im Querschnitt entlang der Linie N-N in Fig. 5a (Fig. 5c) und im Querschnitt entlang der Linie O-O in Fig. 5a (Fig. 5d),

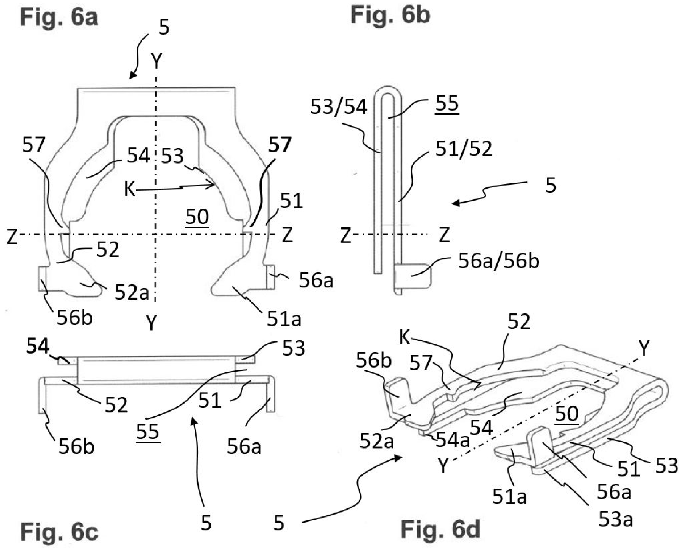

- Fig. 6a bis Fig. 6d: eine Halteklammer der in Fig. 1 dargestellten Ausführungsform eines erfindungsgemäßen Steckverbinders, in der Vorderansicht (Fig. 6a), in der Seitenansicht (Fig. 6b), in der Draufsicht (Fig. 6c) und in dreidimensionaler perspektivischer Darstellung (Fig. 6d).

In den verschiedenen Figuren der Zeichnung sind gleiche Teile stets mit denselben Bezugszeichen versehen und werden daher in der Regel nachfolgend nur einmal beschrieben. Im Sinne einer besseren Übersichtlichkeit sind jedoch nicht in allen Figuren der Zeichnung sämtliche Teile mit ihren Bezugszeichen bezeichnet.

Zu der anschließenden Beschreibung wird beansprucht, dass die Erfindung nicht auf das Ausführungsbeispiel und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich von Bedeutung für den Gegenstand der Erfindung.

Fig. 1 zeigt eine Einzelteildarstellung einer vorteilhaften Ausführungsform eines erfindungsgemäßen Steckverbinders 1 zum Verbinden eines als Rohrstutzen ausgebildeten Steckerteils S. Auch ein derartiger Stecker S ist - in koaxialer Lage hinsichtlich der Längsachse X-X mit dem erfindungsgemäßen Steckverbinder 1 - in Fig. 1 gezeigt.

Das Steckerteil S ist hohlzylinderförmig ausgebildet und weist einen Einsteckabschnitt (Steckerschaft S1) auf, an dessen Außenumfang ein umlaufender, sich konisch entgegen der Einsteckrichtung aufweitender Abschnitt S2 mit gegenüber dem übrigen Einsteckabschnitt (Basis-Durchmesser D1) vergrößertem Durchmesser D2 angeordnet ist. Der konische Abschnitt S2 teilt den Einsteckabschnitt S1 in einen Dichtungsabschnitt S3 und einen Verriegelungsabschnitt S4, wobei der Dichtungsabschnitt S3 axial (Längsachse X-X) in Einsteckrichtung SR vor dem Verriegelungsabschnitt S4 angeordnet ist. Im Verriegelungsabschnitt S4 befindet sich eine Umfangsnut N. Der Dichtungsabschnitt S3 weist einen kleineren Durchmesser auf, nämlich den Basis-Durchmesser D1 des Einsteckabschnitts S1, als es der Durchmesser D4 des Verriegelungsabschnitts S4 ist. Auf dem Dichtungsabschnitt S3 sitzt nach dem Stecken des Steckers S ein dem Steckverbinder 1 zugehöriges Dichtungspaket oder - wie dargestellt - eine O-Ring-Dichtung 2. Ein ebenfalls dem Steckverbinder 1 zugehöriger Buchsenring 3 dient zur Halterung des Dichtungspaketes oder der O-Ring-Dichtung. Die einzelnen Abschnitte des Steckers S - Einsteckabschnitt S1, umfassend den Dichtungsabschnitt S3, den konischen Abschnitt S2 und den Verriegelungsabschnitt S4 - sind der Übersichtlichkeit halber nur in Fig. 1 mit Bezugszeichen gekennzeichnet.

Der Steckverbinder 1 umfasst des Weiteren ein Kupplungsteil 4 und eine zumindest bereichsweise federelastische Halteklammer 5.

Das Kupplungsteil 4 hat einen, insbesondere als Muffenteil ausgebildeten, Grundkörper 6, der als Aufnahmekörper für die Halteklammer 5 fungiert. Der Grundkörper 6 kann mit Vorteil vorzugsweise in fertigungstechnisch einfacher Ausführung als aus Kunststoff bestehendes Spritzguss-Formteil ausgeführt sein, wobei das Kupplungsteil 4 insbesondere aus einem technischen Kunststoff, wie Polymethacrylsäuremethylester (PMMA), Polyethylenterephthalat (PET), Polycarbonat (PC), Acrylnitril-Butadien-Styrol (ABS), Polyoxymethylen (POM) oder Polyamid (PA), insbesondere aus glasfasergefülltem Polyamid, bestehen kann. Für höhere Temperaturbelastungen werden insbesondere auch Polyphthalamide (PPA) als geeignet angesehen.

Das Kupplungsteil 4 kann einseitig mit einer nicht dargestellten Fluidleitung verbunden werden. Zu diesem Zweck ist am Grundkörper 6 ein Anschlussabschnitt 7 ausgebildet, der exemplarisch in einer Ausbildung zum Aufdornen dargestellt ist. Eine anzuschließende Medienleitung kann insbesondere als Schlauch oder Rohr ausgebildet sein.

Auf der dem Anschlussabschnitt 7 für die Medienleitung gegenüberliegenden Seite weist das Kupplungsteil 4 eine Aufnahmeöffnung zum Einstecken des Steckerteils S auf. Diese ist in den Figuren 2b, 3b, 4b und 5b mit dem Bezugszeichen 10 bezeichnet.

Die Halteklammer 5 - Einzeldarstellungen sind in Fig. 6a bis 6d zu sehen - ist am Kupplungsteil 4 vormontierbar und nimmt nach einem radialen Einschieben in der Montagerichtung MR die in Fig. 2a bis Fig. 2d dargestellte Vormontage-Stellung ein, welche die Einführposition für das Steckerteil S darstellt. Die Vormontage-Stellung der Halteklammer 5 ist erst dann vollständig aufgehoben, wenn das Steckerteil S vollständig in das Kupplungsteil 4 eingeführt und die Montage-Stellung erreicht ist, welche in Fig. 5a bis Fig. 5d dargestellt ist.

In der Montage-Stellung nimmt die Halteklammer 5 nach dem Einführen des Steckerteils S eine Halteposition für das eingesteckte Steckerteil S ein, in der das Steckerteil S in der Aufnahmeöffnung 10 mittels der Halteklammer 5 formschlüssig gegen ein Herausziehen blockiert ist.

Die Halteklammer 5 weist zwei Paare 51/52, 53/54, also vier, zumindest bereichsweise federelastische, Klammerarme 51, 52, 53, 54 mit freien Enden 51a, 52a, 53a, 54a auf. In jedem Paar von Klammerarmen 51/52, 53/54 sind diese Klammerarme 51, 52, 53, 54 jeweils durch einen radialen Schlitz 50 voneinander getrennt. Die Klammerarme 51, 52, 53, 54 bilden federelastische Bereiche der Halteklammer 5 und sind insbesondere in radialer Richtung federelastisch. Unter "Schlitz 50" wird dabei der gesamte, das Innere des U bildende, die Steckachse X-X- umgebende, zwischen den Klammerarmen 51 und 52 sowie 53 und 54 liegende Zwischenraum verstanden.

Im Hinblick auf das radiale Einschieben der Halteklammer 5 in der Vormontagerichtung MR ist dabei zu konstatieren, dass dies - im Gegensatz zum Stand der Technik genauer gesagt - nur als ein Aufschieben der Halteklammer 5 auf das Kupplungsteil 4 anzusehen ist, da die freien Enden 51a, 52a, 53a, 54a der Klammerarme 51, 52, 53, 54 zu keinem Zeitpunkt vollständig in das Innere des Grundkörpers 6 der Halteklammer 5 eintauchen.

Die Halteklammer 5 ist von der Grundgestalt her U-förmig ausgebildet, und die Schenkel des U bilden die beiden Paare 51/52, 53/54 von einander diametral gegenüberliegenden Klammerarmen 51, 52, 53, 54 aus, die in axialer Richtung X-X hintereinander angeordnet sind, wobei sie auch in dieser Richtung jeweils durch einen Schlitz (axialer Schlitz 55) voneinander getrennt sind.

Die Klammerarme 51, 52, 53, 54 der Halteklammer 5 sind - sowohl in der Vormontage-Stellung als auch in der Montage-Stellung - jeweils in, zumindest bereichsweise schlitzartigen, im Kupplungsteil 4 ausgebildeten Nuten N1, N2 aufgenommen, die sich in umfangsgemäßer Richtung außenseitig des Kupplungsteils 4 erstrecken.

In der Vormontage-Stellung - siehe Figuren 2a bis 2d - stehen die Klammerarme 51, 52 des ersten Paares 51/52 von Klammerarmen, welche dem einzuführenden Steckerteil S abgewandt sind, unter einer geringen oder keiner radialen mechanischen Spannung, die durch die bei der Vormontage erfolgende radiale Aufweitung der Klammerarme 51, 52 und ein anschließendes Einfedern erzeugt wurde, wobei die freien Enden 51a, 52a dieser Klammerarme 51, 52 außenseitig auf dem Kupplungsteil 4 liegen, wodurch die Halteklammer 5 am Kupplungsteil 4 fixiert ist. Nach einer Aufweitung zum Aufstecken der Haltekammer 5 auf das Kupplungsteil 4 sind die Klammerarme 51, 52 entsprechend der Geometrie (Tiefe, Schlitzlänge) der sie in der Vormontage-Stellung aufnehmenden Nut N1 gar nicht mehr oder nur geringfügig radial aufgeweitet. Dies ist vorteilhaft, weil dadurch Relaxations- und Fließvorgänge unterbunden werden können.

Die Klammerarme 53, 54 des zweiten Paares 53/54 von Klammerarmen, welche dem einzuführenden Steckerteil S zugewandt sind, sind nicht radial aufgeweitet und stehen auch nicht unter radialer Spannung, wobei die freien Enden 53a, 54a dieser Klammerarme frei in einer Nut N2 auf dem Außenumfang U des Kupplungsteils 4 liegen. Durch die Lage des ersten Klammerarmpaares 51/52 und durch die Führung aller Klammerarme 51, 52, 53, 54 in den im Kupplungsteil 4 ausgebildeten Nuten N1, N2 ist die Halteklammer 5 jedoch hinreichend für eine unverlierbare Halterung am Kupplungsteil 4 gesichert. Dabei ist es von Vorteil, wenn sich an einem freien Ende 51a, 52a, 53a, 54a mindestens eines Klammerarmes 51, 52, 53, 54 jeweils ein abgewinkeltes Endstück 56a, 56b befindet. In den dargestellten Ausführungen befinden sich - wie der Zeichnung zu entnehmen ist - in axialer Richtung X-X abgewinkelte Endstücke 56a, 56b an den Klammerarmen 51, 52 des ersten Paares 51/52, welches dem Steckereil S abgewandt ist. Wie Fig. 6a bis 6d zeigen, können diese abgewinkelten Endstücke 56a, 56b auch flächenförmig ausgebildet sein. Die freien Enden 51a, 52a an den Klammerarmen 51, 52 des Paares 51/52 können dabei für einen insbesondere arretierenden Eingriff in das Kupplungsteil 4 bevorzugt nasenförmig ausgebildet sein. Die freien Ende 53a, 54a, des anderen Klammerarmpaares 53/54 laufen geradlinig aus.

In der Montage-Stellung - siehe Figuren 5a bis 5d - stehen die Klammerarme 51, 52 des ersten Paares 51/52 von Klammerarmen unter geringerer radialer Spannung als in der Vormontage-Stellung, wobei die freien Enden 51a, 52a des ersten Paares 51/52 der Klammerarme auf dem Außenumfang U des Kupplungsteils 4 liegen und sich dort abstützen. Sie können dabei sogar gänzlich spannungsfrei sein. Die Klammerarme 51, 52 sind bei der Montage unter der Wirkung des eingeführten Steckerteils S, insbesondere durch Interaktion mit dessen konischem Abschnitt S2, relativ zum Kupplungsteil 4 angehoben worden und dann radial nach innen gefedert.

Letzteres zeigt insbesondere Fig. 5c. Die Steckverbindung S/4 ist dabei funktionsfähig.

Die Klammerarme 53, 54 des zweiten Paares 53/54 von Klammerarmen greifen dabei, insbesondere spannungsfrei, formschlüssig in das Steckerteil S, insbesondere in dessen Nut N, ein, wodurch das Steckerteil S im Kupplungsteil 4 fixiert ist, wobei die freien Enden 53a, 54a des zweiten Paares 53/54 der Klammerarme nach wie vor auf dem Außenumfang U des Kupplungsteils 5 liegen und sich dort abstützen. Dies zeigt insbesondere Fig. 5d.

In der Vormontage-Stellung ist eine Querachse Z-Z, insbesondere eine Mittenachse, der Halteklammer 5 dabei exzentrisch zur Mittenachse X-X des Kupplungsteils 4 und in der Montage-Stellung die Querachse Z-Z der Halteklammer 5 konzentrisch zur Mittenachse X-X des Kupplungsteils 4 angeordnet. Da in der Vormontage-Stellung die Querachse Z-Z der Halteklammer 5 exzentrisch zur Mittenachse X-X des Kupplungsteils 4 angeordnet ist, steht die Halteklammer 5 umfangsgemäß radial merklich gegenüber dem Außenumfang U des Kupplungsteils 4 vor, wodurch auf einfache, aber deutliche und eindeutige Weise angezeigt wird, dass die Montage-Stellung noch nicht erreicht ist, in der die Querachse Z-Z der Halteklammer 5 (siehe dazu insbesondere Fig. 5c und auch Fig. 6b) und die Mittenachse X-X des Kupplungsteils 4 koinzidieren und die Halteklammer 5 wenig oder gar nicht mehr gegenüber dem Umfang U des Kupplungsteils 4, also nahezu überstandsfrei, vorsteht, was das Erreichen des verriegelten Montagezustands anzeigt. Mit Vorteil entfallen dabei ein manuelles Eindrücken der Halteklammer 5 und eine doppelte Bedienerkontrolle, wie diese im Stand der Technik beschrieben sind.

Die Figuren 3a bis 3d sowie die Figuren 4a bis 4d bilden einzelne Phasen des Montagevorgangs zwischen der Vormontage-Stellung (Figuren 2a bis 2d) und der Montagestellung (Figuren 5a bis 5d) ab.

Insbesondere aus der Figurenfolge der Schnittdarstellungen 2b, 3b, 4b, 5b ist dabei deutlich zu entnehmen, wie das Steckerteil S immer tiefer in das Kupplungsteil 4 eindringt. Dies kann z. B. durch ein manuelles Stecken oder ggf. mit Vorteil auch automatisiert realisiert werden. Der konische Abschnitt S2 des Steckerteils S weitet dabei das Paar 51/52 von Klammerarmen unter der Wirkung einer Einsteckkraft sukzessive immer mehr auf, bis durch diese Spreizung ein gegenüber dem Basis-Durchmesser D1 vergrößerter Durchmesser D2 des konischen Abschnitts S2 das erste Paar 51/52 gegenüber dem Umfang U des Kupplungsteils 4 zumindest geringfügig anhebt, wobei gleichzeitig oder geringfügig später das Steckerteil S relativ zum zweiten Paar 53/54 eine Position erreicht, in der die Klammerarme 53, 54 zur Verriegelung in die Nut N des Verrieglungsabschnitts S4 radial hineingleiten können. Es ist also so, dass die freien Enden 51a, 52a der Arme 51, 52, welche durch den Konusteil S2 des Steckerteiles S aufgeweitet werden, die vorher aufgebaute Radialspannung wieder abbauen, indem sie auf dem Radius des konischen Abschnittes S2 des Steckers S, derart abgleiten, dass die Halteklammer 5 radial eingezogen wird. Insbesondere die nasenförmigen Enden 51a, 52a des ersten Paares 51/52 von Klammerarmen sorgen dabei also für die Einzugsbewegung der Klammer 5. Damit wird dann ein jeweils hinterer, gegenüber den freien Enden 53a, 54a verbreiteter Abschnitt 53b, 54b der Klammerarme 53, 54 des zweiten Paares 53/54 von Klammerarmen in die Nut N des Steckers S gesteuert.

Alle diese Bewegungen der Klammerarme 51, 52, 53, 54 laufen dabei vorteilhafterweise selbsttätig, also ausschließlich unter der Wirkung des Einsteckens des Steckerteils S, ab, was auch als "AutoLatch"-Funktion bezeichnet werden kann.

Außerdem kann das Erreichen des verriegelten Montagezustands mit Vorteil auch zusätzlich dadurch angezeigt werden, dass in der Montage-Stellung, wenn die Klammerarme 53, 54 des zweiten Paares 53/54 von Klammerarmen formschlüssig in das Steckerteil S eingreifen, von mindestens einem Klammerarm 51, 52 des ersten Paares 51/52 eine Markierung M, bei der es sich insbesondere um einen aufgedruckten Barcode oder QR-Code/DMC handeln kann, auf dem Außenumfang U des Kupplungsteils 4 freigegeben ist (siehe Fig. 5a), wobei in hier nicht dargestellter Weise diese Markierung M in der Vormontage-Stellung (Fig. 2a) und vor Abschluss der Montage (Fig. 3a und 4a) von dem mindestens einen Klammerarm des ersten Paares 51/52 von Klammerarmen, bevorzugt von Laschen 56a, 56b, zumindest teilweise abgedeckt ist. Hierdurch kann eine digitalisierte Kontrolle erfolgen.

Wie insbesondere die Einzelteildarstellungen in Fig. 2a bis 6d zeigen, ist die Halteklammer 5 hinsichtlich einer durch sie verlaufenden Längsachse Y-Y symmetrisch ausgebildet. Wie bereits erwähnt, ist die Halteklammer 5 dabei von der Grundgestalt her - in Richtung der Längsachse X-X des Steckverbinders 1 gesehen - U-förmig ausgebildet, wobei die Schenkel des U die Paare 51/52, 53/54 von einander diametral gegenüberliegenden Klammerarmen 51, 52, 53, 54 ausbilden. Die Klammerarme 51, 52, 53, 54 bilden insbesondere federelastische Bereiche der Halteklammer 5. Die Schenkel des U sind dabei jeweils radial durch einen Schlitz 50 und axial ebenfalls durch einen Schlitz 55 getrennt.

Die Schenkel des U des zweiten Paares 53/54 von Klammerarmen können über ihre gesamte Länge im Wesentlichen, also zumindest außenseitig, geradlinig ausgebildet sein, während die Schenkel des U des ersten Paares 51/52 von Klammerarmen in der Mitte jeweils einen hinsichtlich der Längsachse Y-Y konkav kreisbogenförmig ausgebildeten Abschnitt K aufweisen. Dies veranschaulicht insbesondere die Figur 6a sehr deutlich. Dort kann sich auch jeweils ein Haltezahn 57 befinden, der weniger radial nach innen vorspringt als die Nasen in den freien Endbereichen 51a, 52a der Klammerarme 51, 52.

Dem geradlinigen Verlauf der Schenkel des U des zweiten Paares 53/54 von Klammerarmen steht nicht entgegen, dass die breiteren Abschnitte 53b, 54b der Schenkel 53, 54 auf der den freien Enden 53a, 54a abgewandten Seite im Sinne einer erhöhten Stabilität und sicheren Montage jeweils breiter sind als an den freien Enden 53a, 54a, wie dies insbesondere die Figuren 2d, 3d, 4d und 5d zeigen.

Hinsichtlich der technischen Bedeutung des konkav kreisbogenförmig ausgebildeten Abschnitts K des ersten Paares 51/52 der Klammerarme ist exemplarisch auf Fig. 5c zu verweisen, aus der hervorgeht, dass dieser konkav kreisbogenförmig ausgebildete Abschnitt K sich beim Übergang in der Montage-Stellung mit Vorteil vorzugsweise formschlüssig, insbesondere im konisch sich entgegen der Einsteckrichtung SR aufweitenden Abschnitt S2 einschließlich des sich dort vorzugsweise befindlichen Zahnes 57, an den Außenumfang des montierten Steckerteils S anlegen kann, wodurch für das erste Paar 51/52 von Klammerarmen in der Montage-Stellung der oben erwähnte vorzugsweise mechanisch spannungsfreie Zustand der Klammerarme 51, 52 erreicht werden kann.

Die Haltezähne 57 können dabei in der Vormontage-Stellung fixierend wirken. Die Haltezähne 57 stützen sich dazu an korrespondierenden Stegen 61 am Grundkörper 6 des Kupplungsteils 4 ab, bis die Klammerarme 51, 52 der Halteklammer 5 vom Konusabschnitt S2 des Steckerteils S genügend aufgeweitet wurden. Dann geben sie die radiale Einzugbewegung der Klammer 5 frei, indem jeweils Haltezahn 57 und Steg 61 außer Eingriff gebracht werden. Die Hauptaufgabe der Haltezähne 57 besteht also darin, zu verhindern, dass die Halteklammer 5 versehentlich eingedrückt werden kann, wenn noch kein Stecker S in der Aufnahmeöffnung 10 des Kupplungsteils 4 angeordnet oder noch nicht weit genug eingeschoben ist (siehe Fig. 2c).

Die Querachse Z-Z bzw. Mittenachse, durch deren relative Anordnung zur Längsachse X-X des Kupplungsteils 4 die exzentrische oder konzentrische Lage der Halteklammer 5 zum Kupplungsteil 4 definiert werden kann, verläuft dabei im Wesentlichen durch die Mittelpunkte der konkav kreisbogenförmig ausgebildeten Abschnitte K der einander gegenüberliegenden Klammerarme 51, 52.

Die Ausführung der Halteklammer 5 an sich - insbesondere gemäß den Figuren 6a bis 6d - wird ebenfalls erfinderische Bedeutung zugemessen.

Die Erfindung ist nicht auf das dargestellte und beschriebene Ausführungsbeispiel beschränkt, sondern umfasst auch alle im Sinne der Erfindung gleichwirkenden Ausführungen. Es wird auch ausdrücklich betont, dass das Ausführungsbeispiel auch nicht auf alle seiner Merkmale in Kombination beschränkt ist, vielmehr kann jedes einzelne Teilmerkmal auch losgelöst von allen anderen Teilmerkmalen für sich eine erfinderische Bedeutung haben.

Ferner ist die Erfindung bislang auch noch nicht auf die in den Ansprüchen 1, 7 und 14 definierte Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann.

### Bezugszeichenliste

- 1: Steckverbinder
- 2: Dichtung von 1
- 3: Buchsenring von 1
- 4: Kupplungsteil von 1
- 5: Halteklammer von 1
- 50: radialer Schlitz zwischen 51 und 52, 53 und 54
- 51: Klammerarm von 5
- 51a: freies Ende von 51
- 52: Klammerarm von 5
- 52a: freies Ende von 52
- 53: Klammerarm von 5
- 53a: freies Ende von 53
- 53b: gegenüber 53a verbreiteter Abschnitt von 53
- 54: Klammerarm von 5
- 54a: freies Ende von 54
- 54b: gegenüber 54a verbreiteter Abschnitt von 54
- 55: axialer Schlitz zwischen 51 und 53, 52 und 53
- 56a: axial abgewinkelter Bereich an 51a
- 56b: axial abgewinkelter Bereich an 52a
- 57: Haltezahn an 51, 52
- 6: Grundkörper von 4
- 61: Steg an 6 für 57
- 7: Anschlussabschnitt von 4
- 10: Aufnahmeöffnung in 4 für S

- D1: Basis-Durchmesser von S1
- D2: Durchmesser von S2
- K: konkave Kontur von 51, 52
- M: Markierung auf U von 4
- MR: Montagerichtung von 5 an 4
- N: Nut in S4
- N1: erste Nut in 4
- N2: zweite Nut in 4
- S: Steckerteil
- S1: Einsteckabschnitt von S
- S2: konischer Abschnitt von S
- S3: Dichtungsabschnitt von S
- S4: Verriegelungsabschnitt von S
- SR: Einsteckrichtung von S in 1
- U: Umfang von 4
- X-X: Längsachse von 1
- Y-Y: Längsachse von 5
- Z-Z: Querachse von 5

## Patentansprüche

1. Steckverbinder (1) für Schlauch- und/oder Rohrverbindungen, umfassend ein Kupplungsteil (4) mit einer Aufnahmeöffnung (10), in die ein Steckerteil (S) mit einem Einsteckabschnitt (S1) in einer Einsteckrichtung (SR) entlang einer Steckachse (X-X) einsteckbar ist, und eine radial geschlitzte (50), zumindest bereichsweise federelastische, vier Klammerarme (51, 52, 53, 54) aufweisende Halteklammer (5), die am Kupplungsteil (4) durch ein radiales Einschieben in einer Montagerichtung (MR) vormontierbar ist und die Halteklammer (5) in einer Vormontage-Stellung eine Einführposition für das Steckerteil (S) einnimmt, in der das Steckerteil (S) durch die Halteklammer (5) in die Aufnahmeöffnung (10) einführbar ist, und die Halteklammer (5) in einer Montage-Stellung nach dem Einführen des Steckerteils (S) eine Halteposition für das eingesteckte Steckerteil (S) einnimmt, in der das Steckerteil (S) in der Aufnahmeöffnung (10) mittels der Halteklammer (5) formschlüssig gegen ein Herausziehen blockiert ist, wobei die Halteklammer (5) von der Grundgestalt her U-förmig ausgebildet ist, und die Schenkel des U ein erstes Paar (51/52) und ein zweites Paar (53/54) von einander diametral gegenüberliegenden Klammerarmen (51, 52, 53, 54) ausbilden, die in axialer Richtung (X-X) hintereinander angeordnet, jeweils durch einen Schlitz (55) voneinander getrennt und in radialer Richtung federelastisch sind,
**dadurch gekennzeichnet, dass**
die Halteklammer (5) ein metallisches Biege-Stanzteil oder ein Spritzgussteil oder Formteil aus einem Hochleistungskunststoff oder aus einem Organoblech ist.

2. Steckverbinder (1) nach Anspruch 1,
**dadurch gekennzeichnet, dass** die Halteklammer (5) hinsichtlich einer durch sie verlaufenden Längsachse (Y-Y) symmetrisch ausgebildet ist.

3. Steckverbinder (1) nach Anspruch 1 oder 2,
**dadurch gekennzeichnet, dass** die Schenkel des U des zweiten Paares (53/54) von Klammerarmen über ihre gesamte Länge im Wesentlichen geradlinig ausgebildet sind.

4. Steckverbinder (1) nach einem der Ansprüche 1 bis 3,
**dadurch gekennzeichnet, dass** das die Schenkel des ersten Paares von Klammerarmen (51/52) endseitig jeweils nasenförmig ausgebildet sind und in der Mitte jeweils einen hinsichtlich der Längsachse (Y-Y) konkav kreisbogenförmig ausgebildeten Abschnitt (K) aufweisen.

5. Steckverbinder (1) nach einem der Ansprüche 1 bis 4,
**dadurch gekennzeichnet, dass** an den Schenkeln des ersten Paares (51/52) von Klammerarmen, insbesondere in dem konkav kreisbogenförmig ausgebildeten Abschnitt (K), jeweils ein radial nach innen weisender Haltezahn (57) angeordnet ist, dem am Grundkörper (6) des Kupplungsteils (4) jeweils ein korrespondierender Steg (61) zugeordnet ist, an dem der Haltezahn (57) in der Vormontage-Stellung anliegt, wodurch ein radiales Einschieben der Halteklammer (5) in das Kupplungsteil (4) verhindert wird, wenn sich kein Steckerteil (S) im Kupplungsteil (4) befindet, wobei bei radialer Aufweitung der Schenkel des ersten Paares (51/52) von Klammerarmen durch das Steckerteil (S) der Haltezahn (57) eine radiale Einzugbewegung der Halteklammer (5) in das Kupplungsteil (4) freigibt.

6. Steckverbinder (1) nach einem der Ansprüche 1 bis 5,
**dadurch gekennzeichnet, dass** sich an einem freien Ende (51a, 52a, 53a, 54a) mindestens eines Klammerarmes (51, 52, 53, 54), vorzugsweise an einem Paar von Klammerarmen (51, 52), ein axial abgewinkeltes Endstück (56a, 56b) befindet.

7. Steckverbinder (1) nach dem Oberbegriff des Anspruchs 1 oder nach einem der Ansprüche 1 bis 6,
**dadurch gekennzeichnet, dass** die Klammerarme (51, 52, 53, 54) der Halteklammer (5) sowohl in der Vormontage-Stellung als auch in der Montage-Stellung jeweils in, zumindest bereichsweise schlitzartigen, im Kupplungsteil (4) ausgebildeten Nuten (N1, N2) aufgenommen sind, die sich in umfangsgemäßer Richtung außenseitig des Kupplungsteils (4) erstrecken, wobei in der Vormontage-Stellung
- die Klammerarme (51, 52) des/eines ersten Paares (51/52) von Klammerarmen, welche dem einzuführenden Steckerteil (S) abgewandt sind, gar nicht oder nur geringfügig radial aufgeweitet sind und dementsprechend nur unter geringer oder keiner radialer mechanischer Spannung stehen, wobei diese Klammerarme (51, 52) zusammen mit einem Steg (61) am Kupplungsteil (4) die Halteklammer (5) am Kupplungsteil (4) fixieren, und
- die Klammerarme (53, 54) des/eines zweiten Paares (53/54) von Klammerarmen, welche dem einzuführenden Steckerteil (S) zugewandt sind, gar nicht oder nur geringfügig radial aufgeweitet sind und dementsprechend nicht unter radialer mechanischer Spannung stehen, wobei die freien Enden (53a, 54a) der Klammerarme (53, 54) am oder im Kupplungsteil (4) geführt sind,
und wobei in der Montage-Stellung
- die Klammerarme (51, 52) des ersten Paares (51/52) von Klammerarmen wie in der Vormontage-Stellung gar nicht oder nur geringfügig radial aufgeweitet sind und dementsprechend nur unter geringer oder keiner radialer Spannung stehen, wobei die freien Enden (51a, 52a) des ersten Paares (51/52) der Klammerarme in einer Nut (N1) des Kupplungsteils (4) liegen und sich auf dem Steckerteil abstützen,
- die Klammerarme (53, 54) des zweiten Paares (53/54) von Klammerarmen formschlüssig in eine Nut (N) des Steckerteils (S) eingreifen, wodurch das Steckerteil (S) im Kupplungsteil (4) fixiert ist,
wobei in der Vormontage-Stellung eine Querachse (Z-Z) der Halteklammer (5) exzentrisch zu einer Mittenachse (X-X) des Kupplungsteils (4) und in der Montage-Stellung die Querachse (Z-Z) der Halteklammer (5) im Wesentlichen konzentrisch zur Mittenachse (X-X) des Kupplungsteils (4) angeordnet ist.

8. Steckverbinder (1) nach einem der Ansprüche 1 bis 7,
**dadurch gekennzeichnet, dass** in der Vormontage-Stellung eine Markierung (M), insbesondere ein aufgedruckter Barcode oder QR-Code/DMC, auf dem Außenumfang (U) des Kupplungsteils (4) von mindestens einem Klammerarm (51, 52, 53, 54), insbesondere des ersten Paares (51/52) von Klammerarmen, zumindest teilweise abgedeckt und in der Montage-Stellung freigegeben ist.

9. Steckverbinder (1) nach einem der Ansprüche 1 bis 8,
**dadurch gekennzeichnet, dass** das Kupplungsteil (4) einen als Muffenteil ausgebildeten, insbesondere einstückigen, Grundkörper (6) aufweist, der als aus Kunststoff bestehendes Spritzguss-Formteil ausgeführt ist.

10. Steckverbinder (1) nach einem der Ansprüche 1 bis 9,
**dadurch gekennzeichnet, dass** das Steckerteil (S) hohlzylinderförmig ausgebildet ist und einen Einsteckabschnitt (S1) aufweist, der einen umlaufenden, sich konisch entgegen der Einsteckrichtung (SR) aufweitenden Abschnitt (S2) umfasst, der den Einsteckabschnitt (S1) in einen Dichtungsabschnitt (S3) und in einen Verriegelungsabschnitt (S4) aufteilt, wobei der Dichtungsabschnitt (S3) axial, also auf der Längsachse (X-X) des Steckerteils (S), in Einsteckrichtung (SR) vor dem Verriegelungsabschnitt (S4) angeordnet ist.

11. Steckverbinder (1) nach Anspruch 10,
**dadurch gekennzeichnet, dass** die Halteklammer (5) in der Montage-Stellung, insbesondere deren zweites Paar (53/54) von Klammerarmen, vorzugsweise mit gegenüber deren freien Enden (53a, 54a) verbreiterten Abschnitten (53b, 54b) in eine Nut (N) in dem Verriegelungsabschnitt (S4) hinter dem sich konisch entgegen der Einsteckrichtung aufweitenden Abschnitt (S2) greift.

12. Steckverbinder (1) nach den Ansprüchen 6 und 11,
**dadurch gekennzeichnet, dass** in der Montage-Stellung das erste Paar (51/52) von Klammerarmen mit dem jeweils konkav kreisbogenförmig ausgebildeten Abschnitt (K) den konischen Abschnitt (S2) des Steckerteils (S) umgreift.

13. Steckverbinder (1) nach einem der Ansprüche 1 bis 12, insbesondere nach einem der Ansprüche 10 bis 12,
**dadurch gekennzeichnet, dass** in der Montage-Stellung auf dem Steckerteil (S), insbesondere auf dessen Dichtungsabschnitt (S3), ein Dichtungspaket oder zumindest eine O-Ring-Dichtung (2) und ein Buchsenring (3) zur Halterung des Dichtungspaketes oder der zumindest einen O-Ring-Dichtung (2) angeordnet sind.

14. Halteklammer (5) für einen Steckverbinder (1) nach einem der Ansprüche 1 bis 13,
**gekennzeichnet durch** die Merkmale des kennzeichnenden Teils des Anspruchs 1 in Verbindung mit den Merkmalen des kennzeichnenden Teils eines oder mehrerer der Ansprüche 2 bis 6.
